Europäisches Patentamt

European Patent Office

Office européen des brevets

(19)

(11) Numéro de publication: **0 498 870 B1**

(12) **FASCICULE DE BREVET EUROPEEN**

(45) Date de publication de fascicule du brevet: **05.07.95**

(51) Int. Cl.⁶: **C11B 3/00**, A23C 15/14, A23L 1/015

(21) Numéro de dépôt: **91916173.7**

(22) Date de dépôt: **04.09.91**

(86) Numéro de dépôt internationale :
**PCT/FR91/00708**

(87) Numéro de publication internationale :
**WO 92/04431 (19.03.92 92/07)**

(54) **PROCEDE D'EXTRACTION DE COMPOSES MINEURS GRAS D'UNE MATIERE D'ORIGINE BIOLOGIOUE.**

(30) Priorité: **04.09.90 FR 9010969**

(43) Date de publication de la demande:
**19.08.92 Bulletin 92/34**

(45) Mention de la délivrance du brevet:
**05.07.95 Bulletin 95/27**

(84) Etats contractants désignés:
**AT BE CH DE DK ES FR GB GR IT LI LU NL SE**

(56) Documents cités:
**EP-A- 0 326 469**
**EP-A- 0 387 708**
**US-A- 3 491 132**

(73) Titulaire: **Roquette Frères**

**F-62136 Lestrem (FR)**

(72) Inventeur: **MENTINK, Léon**
**96, rue du Collège**
**F-59940 Estaires (FR)**
Inventeur: **SERPELLONI, Michel**
**155, route Nationale**
**F-62660 Beuvry-lès-Béthune (FR)**

(74) Mandataire: **Boulinguiez, Didier**
**Cabinet Plasseraud**
**84, rue d'Amsterdam**
**F-75009 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention concerne un procédé d'extraction de composés mineurs gras, notamment de stéroïdes, et plus particulièrement de cholestérol, contenus dans une matière d'origine biologique.

Par "composés mineurs gras", on désigne tous constituants gras non glycéridiques contenus dans des matières naturelles grasses. Il peut s'agir de stéroïdes, notamment de stérols, d'alcools gras, de vitamines liposolubles, de pigments, d'hydrocarbures, d'acides gras libres, d'acides abiétiques et pimariques, de composés d'arômes...

Pour plus de précision, on se référera à la définition donnée dans le "Manuel d'analyse des corps gras" JP WOLF - Ed Azoulay - Paris 1969, pages 11 et 25.

Au sens de la présente invention, le terme "stéroïdes" désigne tous les composés renfermant un squelette cyclopentanophénanthrénique plus ou moins hydrogéné. Beaucoup de ces composés sont des alcools et sont dénommés stérols. Ils peuvent se présenter sous la forme d'esters notamment d'acides gras, communément désignés par le terme "cérides".

Le cholestérol figure parmi les stérols. On sait depuis longtemps qu'il est le constituant principal des calculs biliaires. Sa notoriété s'est récemment accentuée par sa relation avec les troubles circulatoires, et plus particulièrement le durcissement des artères.

Dans les corps gras d'origine animale, on trouve essentiellement du cholestérol non estérifié. Présents dans la majeure partie de notre alimentation, ces corps gras animaux constituent une source de cholestérol non négligeable qui, en cas d'excès, peut être à l'origine de pathologies cardiovasculaires graves dont notamment l'infarctus du myocarde.

Les corps gras d'origine végétale ne contiennent pas de cholestérol mais des phytostérols de structure très voisine de celui-ci, comme par exemple : le $\beta$-sitostérol, le campestérol, le stigmastérol, le brassicastérol, le $\Delta$-7-stigmastérol, le $\Delta$-5-campestérol, le $\Delta$-5-avénastérol, le $\Delta$-7-avénastérol, le $\Delta$-7-9-sigmatadiénol, le fucostérol ou l'ergostérol.

Le procédé suivant l'invention s'applique également aux dérivés oxydés des stéroïdes : les stérones. Ces composés se retrouvent notamment dans les huiles de friture utilisées à plusieurs reprises. Leur présence dans les produits alimentaires n'est pas souhaitée car ils ne sont pas dénués d'effet toxique.

En outre, les stéroïdes sont des produits à haute valeur ajoutée tant économique que technique. Ils sont en effet susceptibles de constituer des matières premières de choix pour la préparation de composés vitaminiques (ergostérol : vitamine D2) ou hormonaux (équilénine, oestrone, progestérone, testostérone ou cortisone...). Outre leurs applications pharmaceutiques, les stéroïdes et plus particulièrement les stérols et leurs esters d'acides gras (cérides) peuvent être utilisés dans l'industrie cosmétique comme émulsifiants.

En ce qui concerne les autres composés mineurs gras, on peut distinguer, d'une part, les composés indésirables sur le plan alimentaire ou technologique tels que les acides gras libres favorisant l'oxydation, les composés de dégradation comme les acides polymérisés, les composés fétides, les matières colorantes et de sapidité, ou autres ; et, d'autre part, les composés à haute valeur alimentaire ou technologique tels que les vitamines liposolubles, les acides gras essentiels (acides linoléique, $\alpha$-linoléique, $\gamma$-linoléique, arachidonique, DHA, EPA), les acides gras rares (acides ricinoléique, abiétique), les composés d'arômes.

C'est donc à plusieurs titres que se justifient tous les développements techniques visant à extraire les composés mineurs gras de matières biologiques grasses. Sous ce terme, on désigne en particulier, d'une part, les matières grasses animales, quelles soient de réserve comme les huiles de poissons ou les huiles animales (suif, gras de volailles, saindoux...), de structure comme celles contenues dans les tissus musculaires, placentaires ou nerveux (viande, oeuf, moelle épinière, cerveau...) ou de sécrétion glandulaire comme les matières grasses laitières, ou de sécrétion dermique comme les cérides (lanoline) ; et, d'autre part, les matières grasses végétales. Enfin, il peut s'agir d'un mélange de matières grasses animales et de matières grasses végétales comme les margarines.

Il a ainsi déjà été proposé diverses méthodes d'extraction de composés mineurs gras de matières biologiques contenant des graisses.

En premier lieu, il existe des techniques d'extraction de stéroïdes, notamment de cholestérol.

L'une d'elles consiste à mettre en contact de la matière grasse d'origine animale avec de la digitonine (glucoside de la digitogénine), qui a la propriété de réagir avec le cholestérol pour donner un précipité insoluble. Les performances et les résultats de cette méthode ne sont pas satisfaisants, du fait de la difficulté de séparation du précipité du milieu. Et en tout état de cause, cette méthode est inapplicable industriellement, notamment pour des produits alimentaires.

Le cholestérol peut également être extrait des matières grasses par entraînement à l'aide d'un solvant. L'inconvénient majeur de ce procédé est que les solvants généralement employés sont toxiques et qu'il en reste toujours des traces dans les matières grasses considérées.

On connaît également des procédés de micro-distillation, inapplicables au niveau industriel, ou bien encore d'absorption sur colonnes comme ceux décrits par exemple dans les demandes de brevet européen n° 0 174 848 et n° 0 318 326. Ces demandes décrivent un procédé suivant lequel la matière grasse maintenue à l'état liquide passe au travers d'une colonne d'absorbant, en l'occurence du charbon actif. Il est clair qu'un tel procédé est très lourd à mettre en oeuvre et de surcroît, l'extraction qu'il permet n'est pas très sélective.

Un autre procédé physico-chimique d'extraction du cholestérol des graisses est divulgué par la demande de brevet japonais n° 59 140 299. Il consiste à mettre en contact une matière chargée en cholestérol telle que la poudre de lait, avec du $CO_2$ supercritique à une température comprise entre 35 et 45°C et à une pression comprise entre 130 et 200 atm. L'obtention de ces conditions physiques nécessite l'emploi d'un matériel complexe et onéreux. La conduite du procédé en est ainsi très délicate. De plus, comme il est précisé dans la demande de brevet, d'autres composés lipidiques sont entrainés par le $CO_2$ supercritique. Ce procédé n'est donc pas sélectif.

Pour éliminer les stérols des graisses, il a été également imaginé un procédé de biodégradation desdits stérols divulgué par la demande de brevet européen n° 0 278 794. Ce procédé met en oeuvre des bactéries qui, mises au contact de la matière grasse, sont aptes à métaboliser les stérols qu'elle contient. Comme tous les procédés faisant intervenir des fermentations, ce procédé de biodégradation est très délicat à conduire du fait de la variabilité inhérente à la matière vivante. De plus, les matériels employés, la durée relativement longue sont, entre autres, des éléments qui rendent un tel procédé onéreux. Enfin, les catabolites produits lors de ces fermentations restent à ce jour totalement inconnus sur le plan de leur nature et de leur toxicité et sont, de toute façon, présents dans la matière grasse ainsi traitée.

On connaît aussi par la demande de brevet européen n° 0 256 911, un procédé d'élimination du cholestérol contenu dans une matière grasse d'origine animale. Il est basé sur la propriété connue depuis 1958 qu'ont les cyclodextrines (polyglucoses cycliques de conformation tubulaire tronconique à 6, 7 ou 8 motifs de glucose et désignées respectivement par alpha, bêta ou gamma cyclodextrine) de recevoir dans leur cavité hydrophobe des molécules de stérols et notamment de cholestérol, pour former des complexes d'inclusion solubles dans l'eau. Selon ce procédé, la matière grasse maintenue fluide est mise en contact en milieu aqueux avec une cyclodextrine sous agitation et sous atmosphère non oxydante pendant 30 minutes à 10 heures de façon à permettre la formation de complexes. La séparation de ces derniers est ensuite réalisée par entraînement à l'eau, qui solubilise ces complexes. La solution aqueuse ainsi obtenue est ensuite recueillie après décantation. La phase lipidique obtenue doit être lavée à l'eau à plusieurs reprises pour éliminer les traces de complexes. Les conditions de mise en oeuvre de ce procédé apparaissent comme étant relativement astreignantes. L'une des principales contraintes à respecter est le maintien d'une atmosphère non oxydante à base d'azote pendant toute la durée de la mise en contact. Cette durée est d'ailleurs très longue en pratique, car si l'on se réfère aux exemples, on constate qu'elle est toujours au moins égale à 3 heures.

Le rendement d'extraction du cholestérol par ce procédé est peu élevé. Dans le meilleur des cas, en effet, il n'est que de 41 % et ce après trois extractions successives comme cela est indiqué dans l'exemple 3 de la description de cette demande de brevet européen.

La quantité d'eau nécessaire pour la mise en contact avant séparation ne représente pas moins de 1000 % en poids par rapport à la matière grasse à traiter.

Toujours sur le même principe d'utilisation des cyclodextrines pour l'extraction de stéroïdes, la demande de brevet européen n° 0 326 469 décrit un procédé d'élimination de composés stéroïdiques contenus dans une substance d'origine biologique. Suivant ce procédé, la substance d'origine biologique, fluidifiée s'il s'agit d'une matière grasse solide à température normale, est mise en contact avec une cyclodextrine en milieu aqueux. Le contact se déroule sous agitation pendant 5 heures à une température de l'ordre de 40°C. On procède ensuite à une séparation des complexes cyclodextrine/stéroïdes. Il faut noter qu'ici encore la durée réelle de mise en contact donnée dans tous les exemples est très longue : 5 heures minimum.

Les faibles rendements d'extraction des stérols donnés dans les exemples témoignent du manque d'efficacité de ce procédé.

Lors de la mise en contact avant séparation, le milieu réactionnel contient plus de 100 % en poids d'eau par rapport à la matière à traiter exprimée sur sec.

En second lieu, il a été envisagé des procédés d'extraction de composés mineurs gras autres que les stéroïdes.

Parmi ces procédés, on peut citer celui décrit dans le brevet US n° 3.491.132 et visant à réduire la teneur en acides gras libres d'huiles glycéridiques à l'aide de cyclodextrine. Dans ce cas, la cyclodextrine est mise en contact avec le milieu gras en présence d'importantes quantités d'eau qui varient de 200 à 1000 % par rapport au milieu gras traité.

Ces trois derniers procédés décrits dans les demandes de brevet européen n° 0 256 911 et 0 326 469 et le brevet US n° 3 491 132 ont en commun au moins un inconvénient important, à savoir qu'ils se déroulent en milieu aqueux et nécessitent de très grandes quantités d'eau pour la mise en contact.

Il est évident que l'utilisation de telles quantités d'eau constitue un handicap sur le plan industriel, puisque cela oblige à manipuler de grands volumes réactionnels et nécessite des équipements de grande capacité, donc encombrants et plus onéreux. Par ailleurs, outre le coût direct non négligeable que cela entraîne, il faut également considérer le traitement des effluents obtenus à l'issue de la séparation ; ce traitement représentant une charge d'autant plus importante que les quantités d'effluents augmentent.

Au vu de ce qui précède, force est de constater que les techniques d'extraction de composés mineurs gras à l'aide de cyclodextrine, qui pourtant sont les plus satisfaisantes, notamment au regard de la qualité des produits obtenus, n'ont pas été optimisées sur le plan de la rentabilité économique et technique.

Soucieuse de favoriser le progrès technique dans ce domaine, la demanderesse a mené de longues et nombreuses recherches au terme desquelles elle a eu le mérite de trouver qu'il était préférable et avantageux d'effectuer la mise en contact avec de faibles quantités d'eau, ou en d'autres termes de ne pas prévoir la solubilisation de toute la cyclodextrine mise en oeuvre pour la mise en contact, en choisissant une température et une quantité d'eau appropriées.

La présente invention concerne ainsi un procédé d'extraction de composés mineurs gras, notamment de stéroïdes, et plus particulièrement le cholestérol, contenus dans une matière d'origine biologique, à l'aide de cyclodextrine, dans lequel la cyclodextrine est mise en contact, sous agitation et dans un milieu réactionnel comprenant de l'eau, avec la matière à traiter de façon à permettre la formation de complexes d'inclusion entre la cyclodextrine et les composés mineurs gras, ces complexes étant ensuite séparés de ladite matière, caractérisé en ce que la quantité d'eau est inférieure à 100 % en poids par rapport à la matière sèche à traiter et en ce que, lors de la mise en contact, la température du milieu réactionnel et la quantité d'eau présente dans ledit milieu, sont choisies de telle sorte que la cyclodextrine se trouve partiellement sous forme non dissoute.

En ajustant ces deux paramètres, ce qui revient à prévoir une concentration en cyclodextrine dans le milieu réactionnel lors de la mise en contact, supérieure à la limite de solubilité de la cyclodextrine à la température réactionnelle, et en limitant ainsi les quantités d'eau employées, on diminue de façon notable tous les coûts de mise en oeuvre du procédé d'extraction, tout en le rendant d'utilisation plus souple et plus aisée.

Qui plus est, les rendements d'extraction sont améliorés pour des durées de mise en contact plus courtes, et les quantités d'effluents recueillies, donc à retraiter, sont sensiblement abaissées. Ces effluents se présentent sous forme concentrée, ce qui limite les coûts de transport et de retraitement.

Les dispositions conformes à l'invention sont particulièrement originales car elles vont à l'encontre de l'enseignement des techniques antérieures d'extraction à l'aide de cyclodextrines, suivant lequel il était prévu d'apporter de l'eau en quantité suffisante pour solubiliser l'essentiel de la cyclodextrine. Il était alors supposé que la complexation ne pouvait s'opérer que si la cyclodextrine était sous forme soluble.

Et il est surprenant et inattendu d'avoir établi, conformément à la présente invention, que la complexation se déroule de manière encore plus satisfaisante sur le plan des rendements et de la durée, lorsque la cyclodextrine ne se trouve que partiellement solubilisée, donc essentiellement en suspension dans l'eau.

Ceci est contraire à l'enseignement de la demande de brevet européen n° 387 708 qui est relative à l'extraction de cholestérol et d'acides gras d'une matière grasse animale à l'aide de cyclodextrine et qui prévoit que cette dernière doit se trouver entièrement sous forme dissoute lors de la mise en contact et préférentiellement en surfusion, c'est-à-dire dans un état sursaturé non cristallisé afin de faciliter par la suite la précipitation des complexes formés.

En pratique, connaissant la température réactionnelle pour la mise en contact, on détermine la concentration en cyclodextrine appropriée en prenant soin de la choisir supérieure à la limite de solubilité de la cyclodextrine à cette température.

Pour cela, on se réfère aux constantes de solubilité de la cyclodextrine dans l'eau, en fonction de la température. Le tableau ci-après extrait de "Cyclodextrins and their inclusion complexes" (page 33) Akademiai Kiado, Budapest 1982 - J. SZEJTLI, donne les valeurs limites de solubilité mesurées pour la bêtacyclodextrine.

| Grammes de $\beta$-cyclodextrine dans 100 ml d'eau | Température en degrés Celsius |
|---|---|
| 1,20 | 15 |
| 1,48 | 20 |
| 1,79 | 25 |
| 2,25 | 30 |
| 3,51 | 40 |
| 4,64 | 50 |
| 6,05 | 55 |
| 7,49 | 60 |
| 10,18 | 65 |
| 12,03 | 70 |
| 14,80 | 75 |
| 19,66 | 80 |

Pour une température réactionnelle donnée, on définit un "niveau de saturation" de la cyclodextrine en solution dans l'eau, qui correspond au rapport suivant :

**Grammes de cyclodextrine pour 100 ml d'eau**

---

**Valeur limite de solubilité de la cyclodextrine à la température donnée, exprimée en grammes de cyclodextrine pour 100 ml d'eau**

Conformément à l'une des caractéristiques essentielles de la présente invention, le niveau de saturation de la cyclodextrine présente dans le milieu réactionnel, lors de la mise en contact, est supérieur ou égal à 1,67, de préférence supérieur ou égal à 1,87, et plus préférentiellement encore supérieur ou égal à 2. On le choisit généralement inférieur à 3000, de préférence inférieur à 1500 et plus préférentiellement encore inférieur à 750.

Le procédé suivant l'invention peut s'appliquer aux corps gras naturels constitués essentiellement par des triglycérides, mais pauvres en phospholipides totaux : c'est-à-dire ayant une teneur en phospholipides totaux inférieure à 10 % en poids par rapport aux lipides totaux.

Ce procédé permet notamment l'extraction de stéroïdes, comme le cholestérol, de nombreuses matières biologiques. Il peut s'agir de matières grasses animales et/ou végétales parmi lesquelles on peut citer :

- les matières grasses laitières telles que le beurre, concentré ou non ;
- les matières grasses animales telles que le suif, le saindoux, la graisse de cheval, les graisses de volailles, les huiles de poissons, la lanoline ;
- les matières grasses végétales comme les matières grasses végétales hydrogénées, l'huile de palme, l'huile de coprah, le beurre de cacao ;
- et les mélanges de celles-ci comme les margarines.

En plus de l'élimination de ces composés dans des produits alimentaires, le procédé conforme à l'invention offre une source intéressante de stéroïdes susceptibles d'être utilisés dans la préparation de principes pharmaceutiques notamment hormonaux et vitaminiques, ou dans l'industrie cosmétique comme émulsifiants.

La cyclodextrine utilisée peut être du type alpha, bêta ou gamma, de préférence bêta, substituée ou non. Les groupements mono- ou poly-substituants de la cyclodextrine peuvent être notamment des groupes alkyle tels que le groupe hydroxypropyle ou éthyle, ou des saccharides du type glycosyle, maltosyle ou autres. On peut choisir également de la cyclodextrine rendue insoluble dans l'eau, par exemple par polymérisation.

Avantageusement, la cyclodextrine mise en oeuvre dans le procédé suivant l'invention se présente sous forme pulvérulente séchée. Selon un mode particulier de mise en oeuvre, elle possède une teneur en eau inférieure ou égale à 11 % en poids, de préférence à 7 % en poids, et plus préférentiellement encore à 5 % en poids. Elle est éventuellement réhydratée jusqu'à une teneur en eau inférieure ou égale à 15 % en poids.

Conformément à une disposition avantageuse de la présente invention, la quantité d'eau présente dans le milieu réactionnel, lors de la mise en contact et avant séparation est, de préférence, comprise entre 10 et 90 %, et plus préférentiellement encore comprise entre 20 et 80 % en poids par rapport à la matière à traiter exprimée sur sec.

Il est intéressant de noter que la mise en contact se déroule sous atmosphère ambiante. En effet, les conditions du procédé ne sont pas sévères et ne risquent pas d'entraîner des dégradations comme l'oxydation sur les composés gras sensibles (acides gras insaturés). Et mieux encore, la cyclodextrine permet en plus d'éliminer au moins partiellement les éventuels composés prooxydants indésirables.

Conformément à un mode préféré de mise en oeuvre de l'invention, la mise en contact cyclodextrine/matière à traiter s'effectue à une température choisie de telle sorte que les corps gras contenus dans ladite matière se trouvent à l'état figé.

Par état figé, on entend au sens de la présente invention, un état dans lequel le taux de corps gras solides ou cristallins est supérieur ou égal à 5 % en poids.

Ce taux de corps gras solides est une grandeur usuelle dans le domaine de la technologie des lipides. Il se mesure par Résonance Magnétique Nucléaire basse résolution, à l'aide de minispectromètres à impulsions.

La RMN à impulsions, basée sur le fait que les molécules de corps gras dans la phase liquide ont un degré de mobilité supérieur à celui des molécules de la phase solide, permet de déterminer le pourcentage de matière grasse solide ou liquide. Le principe et les applications de cette méthode sont décrits par exemple dans la revue R.I.B.C. de Janvier-Février 1985, n° 80, pages 23 à 26, ou dans la revue I-A-A de Mai 1988, pages 463 à 471 ou de Juin 1988, pages 463 à 470.

Contrairement à ce qui est préconisé par l'art antérieur et notamment dans les demandes de brevet européen n° 0 256 911 et 0 326 469 et le brevet US n° 3.491.132 précités, la demanderesse a mis en évidence que, de façon surprenante et inattendue, l'état figé des corps gras entrant dans la constitution de la matière à traiter correspond à un état avantageux pour la complexation des composés mineurs gras, notamment des stéroïdes, avec la cyclodextrine au stade de la mise en contact sous agitation.

De préférence, les conditions opératoires sont choisies de telle manière que le taux de substances grasses solides soit supérieur ou égal à 10 %, et plus préférentiellement encore supérieur ou égal à 30 %.

Dans ce mode préféré de mise en oeuvre, la matière à traiter, l'eau -si ladite matière à traiter n'en contient pas ou pas assez- et ensuite la cyclodextrine, de préférence sous forme pulvérulente, sont mises en présence dans un mélangeur équipé de moyens de malaxage. La séquence d'introduction des produits est de préférence celle indiquée ci-dessus, mais on peut aussi, parmi toutes les variantes possibles, prémélanger la matière à traiter et l'eau.

Avantageusement, le mélange se présente sous une forme pâteuse que l'on soumet, pendant toute la durée de mise en contact, à une opération de malaxage au cours de laquelle intervient la formation de complexes cyclodextrine/composés mineurs gras.

Pour la séparation de ceux-ci, et il s'agit là aussi de l'une des originalités de ce mode préféré de mise en oeuvre du procédé suivant l'invention, la pâte malaxée est portée à une température choisie de telle sorte que les corps gras constituant la matière à traiter se trouvent à l'état fondu, c'est-à-dire dans un état caractérisé par un taux de corps gras solides ou cristallins inférieur à 1 % en poids.

Cette transformation à l'état fondu permet d'obtenir, d'une part, une phase contenant les corps gras et à teneur réduite en composés mineurs gras et, d'autre part, une phase mixte hydrolipidique contenant les complexes d'inclusion cyclodextrine/composés mineurs gras.

Ces deux phases se séparent parfaitement bien l'une de l'autre et il est donc aisé de recueillir la phase grasse exempte de composés mineurs gras, qui peut ensuite être employée dans diverses applications. La phase mixte peut quant à elle être retraitée pour en extraire les composés mineurs gras susceptibles d'être valorisés, notamment dans le domaine pharmaceutique ou cosmétique.

Lorsque la matière à traiter est une matière grasse animale et/ou végétale à forte teneur en lipides comme par exemple le beurre, concentré ou non, le suif, le saindoux, les graisses de volailles, les lanolines, les huiles végétales hydrogénées, les graisses de palme ou de coprah, les margarines..., elle est introduite dans un dispositif de malaxage du type pétrin équipé de moyens de régulation de la température.

On y incorpore ensuite éventuellement de l'eau dans la mesure où la matière d'origine biologique à traiter n'en contient pas suffisamment pour la mise en oeuvre du procédé conformément à l'invention. La quantité d'eau nécessaire est de préférence comprise entre 20 et 60 % en poids par rapport à la matière d'origine biologique à traiter, exprimée en sec.

Puis on ajoute la cyclodextrine, de préférence sous forme pulvérulente et en quantité suffisante pour se trouver partiellement sous forme non dissoute à la température réactionnelle et pour former des complexes d'inclusion avec les composés mineurs gras à extraire.

La détermination de la quantité adéquate de cyclodextrine à utiliser est fonction, d'une part, de la limite de solubilité de la cyclodextrine à la température considérée, et d'autre part, de la quantité de composés mineurs gras à extraire, et de leurs affinités pour la cyclodextrine. En règle générale, la quantité de cyclodextrine est de 0,5 % à 15 % par rapport à la matière d'origine biologique à traiter exprimée en sec, de préférence de 1 à 10 % et plus préférentiellement de 3 à 8 %.

Le malaxage de la pâte formée par le mélange de ces constituants est effectué à une température maintenue constante par les moyens de régulation et choisie de telle sorte que la matière grasse soit à l'état figé avec un taux de corps gras solides ou cristallins supérieur à 5 %, de préférence supérieur à 10 % et plus préférentiellement compris entre 30 et 50 % en poids. Pour le beurre concentré par exemple, la température est choisie de préférence environ entre 10 et 25°C.

Au bout d'un temps variable, compris entre 10 à 120 mn, le malaxage est interrompu et la pâte est chauffée suffisamment pour que le taux de solides de la matière grasse soit inférieur à 1 % en poids. Il se forme alors un culot hydrolipidique contenant les complexes et un surnageant liquide huileux constitué par la matière grasse à teneur réduite en composés mineurs gras.

En ce qui concerne ce mode préféré de mise en oeuvre du procédé suivant l'invention, il est à noter que celui-ci peut parfaitement s'intégrer dans le cadre de la fabrication de beurre à partir de crème. Cette dernière comprend essentiellement les étapes suivantes :

- maturation biologique ou physique (procédé NIZO) de la crème ;
- barattage continu ou discontinu avec inversion d'émulsion et séparation du babeurre ;
- malaxage éventuellement avec maturation biologique (procédé NIZO) ;
- éventuellement lavage à l'eau.

Conformément à l'invention, la cyclodextrine peut être ajoutée après séparation du babeurre, au cours du malaxage. Au terme d'une mise en contact qui s'effectue à la température de barattage (inférieure à 15°C), on procède à la séparation des complexes d'inclusion formés par passage à l'état fondu.

Suivant un autre mode de mise en oeuvre du procédé suivant l'invention, on effectue la mise en contact de la cyclodextrine avec la matière à traiter à une température choisie de telle sorte que les corps gras constituant ladite matière se trouvent dans un état non figé.

Dans ce mode de mise en oeuvre du procédé suivant l'invention, la matière à traiter, l'eau et la cyclodextrine, de préférence introduites dans cet ordre, sont mélangées sous agitation à une température sélectionnée de telle sorte que les corps gras présents soient liquides (taux de solides inférieur à 5 % et de préférence à 1 %).

Les températures correspondant à un taux de solides inférieur à 1 % sont de préférence inférieures à 70°C pour la majorité des corps gras. La détermination de la température minimale pour la mise en contact est tout à fait à la portée de l'homme de métier. Elle dépend évidemment de la nature de la matière grasse considérée.

La quantité d'eau nécessaire est, de préférence, comprise entre 45 et 80 % en poids par rapport à la matière d'origine biologique à traiter exprimée en sec.

Ce mode de mise en oeuvre convient particulièrement bien pour le traitement d'huiles présentant un taux de solides inférieur à 1 % à température ambiante, comme les huiles végétales de tournesol, de soja, de colza, de maïs... ou comme les huiles de poissons.

Le temps de mise en contact varie de préférence entre 10 et 120 mn.

Pour séparer les complexes d'inclusion formés, on procède par exemple à une centrifugation ou à une décantation du mélange obtenu après la mise en contact, de manière à recueillir un culot contenant lesdits complexes, une phase intermédiaire aqueuse, et une phase surnageante lipidique à teneur réduite en composés mineurs gras.

Les deux modes de mise en oeuvre du procédé selon l'invention présentés ci-dessus, permettent l'extraction des stéroïdes et en particulier des stérols avec des rendements atteignant environ 90 % en un seul traitement. Ces rendements peuvent être améliorés en multipliant les traitements. Ces performances d'extraction sont obtenues de façon économique et aisée en un temps relativement court.

Un autre intérêt du procédé conforme à l'invention est qu'il peut permettre l'extraction sélective d'un certain nombre de composés mineurs gras à partir d'une matière d'origine biologique, dans un ordre déterminé, en agissant sur un ou plusieurs paramètres essentiels du procédé, à savoir notamment la quantité d'eau présente au moment de l'étape de complexation, la quantité de cyclodextrine, la température de mélange ou de malaxage, la température de déphasage, le pH du milieu.

Il va de soi que l'invention ne se limite pas aux modes de mise en oeuvre décrits ci-dessus, mais au contraire en englobe toutes les variantes.

Les exemples qui suivent permettront de mieux comprendre le procédé selon la présente invention en mettant en évidence tous les avantages qu'il procure.

## EXEMPLE I

Extraction de stérols, et plus particulièrement de cholestérol, contenus dans un beurre concentré conformément au mode préféré de mise en oeuvre du procédé suivant l'invention.

Le beurre concentré employé a une richesse en matières grasses de l'ordre de 99,9 %. On choisit par exemple le beurre concentré standard commercialisé par la Société CORMAN.

La cyclodextrine est une bêta cyclodextrine du type de celle commercialisée par la demanderesse sous la marque déposée KLEPTOSE et se présentant sous la forme d'une poudre blanche à 12 % d'humidité environ.

### 1. Mise en contact

300 g de beurre concentré sont introduits dans la cuve d'un pétrin malaxeur du type de ceux commercialisés par la Société KUSTNER. La cuve du malaxeur est pourvue d'une double paroi dans laquelle peut circuler un fluide régulateur de la température. Le malaxeur est mis en fonctionnement et la température est consignée à une valeur moyenne de 14°C environ. A cette température, le beurre concentré possède un taux de corps gras solides de 28 % environ.

On ajoute ensuite successivement 150 g d'eau et 5,70 g de cyclodextrine KLEPTOSE. Sachant que la cyclodextrine employée comprend 12 % d'eau, la concentration en solution aqueuse de la cyclodextrine est

$$\frac{5,7 \times 0,88}{150,7} \times 100 = 3,3 \text{ g}$$

pour 100 g d'eau.

A la température de mise en contact (14°C), la limite de solubilité de la bêtacyclodextrine est de 1,20 g pour 100 g de solution. Ceci revient à dire que dans notre exemple, le niveau de saturation de la cyclodextrine est de 2,75.

La mise en contact se déroule alors pendant 30 minutes.

### 2. Séparation des complexes d'inclusion

Le mélange pâteux beurre concentré/eau/cyclodextrine retiré du malaxeur est chauffé à une température de l'ordre de 37°C (taux de corps gras solides du beurre concentré inférieur à 1 %). Il se produit spontanément un déphasage et on obtient un culot pâteux contenant notamment les complexes d'inclusion et de l'eau. Ce culot est surmonté d'une phase huileuse formée par le beurre concentré décholestérolisé. On peut alors recueillir plus de 94 % en poids du beurre concentré mis en oeuvre.

Le cholestérol est dosé par méthode colorimétrique, après oxydation en cholesténone par la cholestéroloxydase, suivant la méthode et avec les réactifs référencés n° 139 050 de la société BOEHRINGER Mannheim.

La teneur initiale en cholestérol du beurre concentré est de 0,270 % en poids.

La teneur finale est de 0,038 %.

Le rendement d'extraction s'élève donc à 86 %.

Une deuxième extraction conduite dans les mêmes conditions procure un rendement de 74 %, ce qui donne un rendement global de 96 %.

On constate que les performances du procédé suivant l'invention sont tout à fait remarquables tant sur le plan quantitatif que sur celui de la durée.

La quantité d'eau employée est tout à fait minime et ne pose pas de problème de manipulation. Le culot pâteux qui contient de l'eau utilisée ne représente que 173 g. Cette quantité minime et concentrée ne pose pas de problème quant à son retraitement.

**EXEMPLE II**

Extractions de stérols, et plus particulièrement de cholestérol, contenus dans le beurre concentré conformément au mode préféré de mise en oeuvre de l'invention.

Dans cet exemple, on a réalisé 9 essais d'extraction de stérols du beurre concentré en employant les mêmes équipements et en respectant le même protocole que dans l'exemple I. On a simplement fait varier certains paramètres expérimentaux. Les données et résultats de ces essais sont présentés dans le tableau I qui suit :

TABLEAU I

| Essais | Eau % (1) | Eau ml | Température moyenne en °C | L.S.* | CD* (2) | Kleptose en g | Temps de mise en contact en minutes | Rendement (3) | Niveau de saturation |
|---|---|---|---|---|---|---|---|---|---|
| 1 | 20 | 60 | 15 | 1,20 | 5 | 15 | 30 | 65 | 17,80 |
| 2 | 30 | 90 | 15 | 1,20 | 5 | 15 | 30 | 85 | 12,00 |
| 3 | 50 | 150 | 15 | 1,20 | 5 | 15 | 30 | 84 | 7,25 |
| 4 | 100 | 300 | 15 | 1,20 | 5 | 15 | 30 | 75 | 3,64 |
| 5 | 50 | 150 | 16 | 1,20 | 7 | 21 | 30 | 93 | 10,10 |
| 6 | 50 | 150 | 16 | 1,20 | 5 | 15 | 15 | 75 | 7,25 |
| 7 | 50 | 150 | 26,5 | 1,80 | 5 | 15 | 30 | 65 | 4,83 |
| 8 | 50 | 150 | 16 | 1,20 | 3 | 9 | 30 | 59 | 4,37 |
| 9 | 50 | 150 | 16 | 1,20 | 3 | 9 | 120 | 55 | 4,37 |

\* L.S. = limite de solubilité à température donnée
\* CD = cyclodextrine

(1) % par rapport au beurre concentré
(2) % par rapport au beurre concentré
(3) Rendement d'extraction cholestérol final/cholestérol initial (en %)

Commentaires du Tableau I

En comparant les résultats des essais 1 à 4 qui ne se différencient que par la quantité d'eau mise en oeuvre, on constate que le rendement d'extraction en cholestérol exprimé en % est maximum pour des teneurs en eau comprises entre 30 et 50 % par rapport au beurre concentré. L'augmentation de la teneur en eau fait chuter le rendement d'extraction.

En comparant les résultats des essais 3 et 5 pour lesquels seule la concentration en cyclodextrine KLEPTOSE diffère (respectivement 5 et 7 % par rapport au beurre concentré), on constate qu'il est possible d'augmenter le rendement d'extraction de 9 % uniquement en augmentant la concentration en cyclodextrine de 2 %.

Dans l'essai 6 la durée de malaxage a été réduite à 15 minutes. Le rendement obtenu est de 75 %, ce qui constitue un résultat très satisfaisant.

Pour l'essai 7, la température de mise en contact a été élevée à 26,6°C. En réduisant le taux de solides dans le beurre concentré, on réduit le rendement d'extraction en cholestérol (65 % contre 84 % pour l'essai 3).

En utilisant 3 % de cyclodextrine par rapport au beurre concentré (essais 8 et 9) on constate qu'au-delà de 30 mn une prolongation du malaxage ne permet pas d'augmenter les rendements.

## EXEMPLE III

Extraction de stérols, et plus particulièrement de cholestérol, contenus dans du beurre conformément au mode préféré de mise en oeuvre du procédé suivant l'invention.

Le beurre employé dans cet exemple est un beurre du commerce contenant 82 % de matières grasses.

La cyclodextrine, les équipements ainsi que le protocole sont les mêmes que pour les exemples précédents, la seule différence étant que l'on n'ajoute pas d'eau ; c'est le beurre lui-même qui apporte l'eau nécessaire à la complexation.

Les données et résultats de cet exemple sont indiqués dans le Tableau II suivant :

## TABLEAU II

| | Eau | | Température moyenne en °C | L.S.* | CD* (2) | Kleptose en g | Durée de mise en contact | Rendement d'extrac-tion en % | Niveau de saturation |
|---|---|---|---|---|---|---|---|---|---|
| | % (1) | g | | | | | | | |
| Beurre 150 g | 20,5 | 25,5 | 12,5 | 1,10 | 5 | 7,5 | 45 | 80 | 22,73 |

* L.S. = limite de solubilité à température donnée
* CD = cyclodextrine

(1) % par rapport à la matière grasse
(2) % par rapport à la matière grasse

On montre ici que le procédé suivant l'invention est également efficace sur une matière à traiter contenant initialement de l'eau dans une quantité conforme aux caractéristiques de la présente invention.

12

**EXEMPLE IV**

Extraction de stérols, et plus particulièrement de cholestérol, contenus dans du suif, conformément au mode préféré de mise en oeuvre du procédé suivant l'invention.

On traite 200 g de suif à 99 % de matières grasses, du type de celui commercialisé par la Société ROUSSELOT, de la même façon que dans les exemples précédents.

La teneur initiale en cholestérol du suif est de 0,12 % en poids.

Le tableau III ci-après expose les données et les résultats du présent exemple.

EP 0 498 870 B1

## TABLEAU III

| | Eau % (1) | Eau g | Température moyenne en °C | L.S.* | CD* (2) | Kleptose en g | Durée de mise en contact | Rendement d'extrac- tion en % | Niveau de saturation |
|---|---|---|---|---|---|---|---|---|---|
| Suif | 50 | 100 | 16 | 1,20 | 3 | 6 | 30 | 83 | } 4,36 |
| | | | | | | | 60 | 82 | |
| 200 g | 25 | 50 | 16 | 1,20 | 3 | 6 | 30 | 86 | } 8,70 |
| | | | | | | | 60 | 84 | |

\* L.S. = limite de solubilité à température donnée
\* CD = cyclodextrine

(1) % par rapport à la matière grasse
(2) % par rapport à la matière grasse

Commentaires du Tableau III

Il apparaît qu'une quantité d'eau de 25 % en poids par rapport au suif est suffisante pour extraire 86 % du cholestérol initial, et ce avec seulement 3 % en poids de cyclodextrine par rapport au suif.

Une augmentation de la quantité d'eau et/ou de la durée de mise en contact ne permet pas d'améliorer ce rendement d'extraction.

Dans cet exemple, on a également mesuré les variations des indices d'acides. L'indice d'acide est défini par le nombre de mg de potasse nécessaire pour neutraliser l'acidité de 1 g de suif. L'indice d'acide du suif avant extraction est de 0,85.

Le tableau IV ci-après présente les résultats obtenus.

TABLEAU IV

|  | Eau<br>(% par rapport au suif) | Température<br>° C | CD Kleptose<br>(% par rapport au suif) | Durée mise<br>en contact | Indice<br>d'acide<br>final | % de<br>réduction<br>de l'indice<br>d'acide |
|---|---|---|---|---|---|---|
| Suif | 50 | 26 | 3 | 30 | 0,65 | 30 |
| 200 g | 25 | 16 | 3 | 30 | 0,12 | 86 |

On montre ici que la diminution de l'indice d'acide, donc de la teneur en acides gras libres, du suif est très marquée avec 25 % d'eau.

**EXEMPLE V**

Extraction de stérols, et plus particulièrement de cholestérol, contenus dans une huile de poisson, conformément au mode préféré de mise en oeuvre du procédé suivant l'invention.

L'huile de poisson utilisée est une huile de saumon présentant une teneur en cholestérol de 0,71 %. Dans un premier essai, 300 g de cette huile sont mélangés à 150 g de paillettes de glace et 30 g de cyclodextrine KLEPTOSE. On met ensuite en oeuvre le traitement d'extraction tel que décrit dans l'exemple 1. La température de mise en contact est de 4°C.

Dans un second essai, 120 g de cette huile sont prémélangés à 180 g d'huile de coprah hydrogénée pendant 20 minutes à 18°C. Le mélange de matières grasses obtenu est ensuite soumis au procédé d'extraction conforme à celui décrit dans les exemples précédents en utilisant 15 g de cyclodextrine KLEPTOSE et 90 g d'eau.

Les résultats et données de ces deux essais sont rassemblés dans le Tableau V.

TABLEAU V

| Huiles de poisson/ Matières grasses traitées | % eau/ MG | % CD Kleptose /MG | % CD Kleptose/ Huile de poisson | L.S. * | Tempé-rature en °C | Temps | Taux d'ex-traction en % | Niveau de satu-ration |
|---|---|---|---|---|---|---|---|---|
| Essai 1 | 100 % | 50 | 10 | 10 | 0,90 | 4 | 30 | 27 | 19.10 |
| Essai 2 | 40 % | 30 | 5 | 12.5 | 1,40 | 18 | 30 | 66 | 10,27 |

* L.S. = limite de solubilité à température donnée

Par ajustement du taux de solides par ajout d'huile de coprah hydrogénée, on améliore le rendement d'extraction du cholestérol initialement présent dans l'huile de saumon.

**EXEMPLE VI**

Extraction de pigments liposubles, de composés d'arômes et de composés de dégradation contenus dans une matière grasse de friture et dans une huile de poisson, conformément au mode préféré de mise en oeuvre du procédé suivant l'invention.

Une matière grasse végétale pour friture, commercialisée par la Société LESIEUR sous la marque VEGE-TALINE est employée pour réaliser 12 fritures espacées dans le temps :
- 2 fritures de poissons panés,
- 3 fritures de pommes de terres en tranches,
- 3 fritures de filets de merlan,
- 1 friture de gras de bardière de porc,
- 3 fritures de croquettes de viande.

Cette matière grasse est traitée avec et sans $\beta$-cyclodextrine KLEPTOSE selon le mode opératoire décrit dans l'exemple 1.

L'odeur et la couleur des produits après traitement sont évaluées qualitativement. Les résultats sont donnés dans le Tableau VI ci-dessous.

Le niveau de dégradation des matières grasses est apprécié en utilisant le test OXIFRIT-TEST® commercialisé par la Société MERCK.

Une huile de poisson démucilaginée est traitée de la même façon à basse température. L'odeur et la couleur de cette huile traitée ou non avec $\beta$-cyclodextrine sont présentes dans le Tableau VI.

**TABLEAU VI**

| Nature (1) | Essai | %/eau/mg | % β-cyclo-dextrine/mg | L.S.* | Temp. (2) | Temps (3) | Temp. (4) | Odeur à 20°C | Couleur à l'état fondu | Résultat (5) | N.S.* |
|---|---|---|---|---|---|---|---|---|---|---|---|
| M.G.* végétale après 12 fritures | 1 | 50 | 0 | - | 16 | 30 | 60 | Odeur de friture très forte | Marron | A changer (vert foncé) | - |
| | 2 | 50 | 5 | 1,20 | 16 | 30 | 60 | Faible odeur | Crème | Encore bonne (émeraude) | 7,24 |
| huile de poisson démucilaginée non raffinée | 3 | 30 | 0 | - | 3 | 30 | 60 | Odeur rance et piquante | Brun foncé | - | - |
| | 4 | 30 | 5 | 0,90 | 3 | 30 | 60 | Odeur de poisson frais | Jaune | - | 16,0 |

* L.S. = limite de solubilité à température donnée
* N.S. = niveau de saturation
* M.G. = matière grasse

(1) Nature de la matière traitée
(2) Température de traitement en °C
(3) Temps de mise en oeuvre
(4) Température de séparation en °C
(5) Résultat du test OXIFRIT®

On s'aperçoit que les deux matières grasses traitées à l'aide de β-cyclodextrine conformément à l'invention présentent de meilleures caractéristiques organoleptiques.

En ce qui concerne la matière grasse de friture, le traitement avec β-cyclodextrine a permis l'élimination de composés oxydés (hydroperoxydes, aldéhydes, cétones, stérones...)

18

**EXEMPLE VII**

Extraction de stérols, et plus particulièrement de cholestérol, contenus dans du beurre concentré, conformément au deuxième mode de mise en oeuvre du procédé suivant l'invention.

Dans cet exemple, le beurre concentré et la cyclodextrine utilisés sont identiques à ceux des exemples I et II.

1. Mise en oeuvre

Dans un conteneur équipé de moyens d'agitation, on introduit 300 g de beurre concentré contenant 0,27 % de cholestérol, que l'on porte à une température de 50°C. On y ajoute ensuite 150 g d'eau et 15 g de cyclodextrine KLEPTOSE. La mise en contact se déroule pendant 30 mn sous agitation et en maintenant la température à 50°C. Le niveau de saturation est de

$$\frac{8,68}{4,64} = 1,87.$$

2. Séparation des complexes

Le mélange beurre concentré/cyclodextrine KLEPTOSE/eau est soumis à une centrifugation à 3000 g pendant 5 minutes. La centrifugation permet de séparer le mélange en trois phases :
- un culot pâteux contenant les complexes d'inclusion cyclodextrine/stéroïdes ;
- une phase intermédiaire aqueuse ;
- et une phase surnageante à teneur réduite en stérols.

Après lavage de la phase surnageante avec une quantité égale d'eau, on détermine un rendement d'extraction en cholestérol de 80 %.

Il apparait que le procédé conforme à l'invention permet une importante réduction de la teneur en stérols avec une quantité d'eau limitée.

**EXEMPLE VIII**

Extraction de stérols, et plus particulièrement de cholestérol, contenus dans du beurre concentré, conformément au deuxième mode de mise en oeuvre du procédé suivant l'invention.

Dans cet exemple, on a réalisé 6 essais d'extraction de stérols du beurre concentré de la même façon que dans l'exemple VII. On a simplement fait varier certains paramètres expérimentaux. Les données et résultats de ces essais sont présentés dans le Tableau VII suivant :

**TABLEAU VII**

| Essais | Eau (1) | Tempér. M | S (2) | CD Kleptose % par rapport à la MGLA* | L.S.* | Temps (3) | Rendement (4) | Niveau (5) |
|---|---|---|---|---|---|---|---|---|
| 1 | 50 | 50 | 50 | 1 | 4,64 | 30 | 26 | 0,38 |
|  | " | " | " | 2 | " | " | 33 | 0,75 |
|  | " | " | " | 5 | " | " | 80 | 1,87 |
|  | " | " | " | 7 | " | " | 88 | 2,60 |
| 2 | 60 | 45 | 50 | 7 | 4,10 | 30 | 83 | 2,47 |
|  | " | 55 | " | " | 6,05 | " | 80 | 1,67 |
|  | " | 60 | " | " | 7,49 | " | 83 | 1,35 |
|  | " | 65 | " | " | 10,8 | " | 71 | 0,94 |
|  | " | 70 | " | " | 12,03 | " | 56 | 0,84 |
| 3 | 60 | 60 | 60 | 7 | 7,49 | 30 | 83 | 1,35 |
|  | " | " | 75 | " | " | " | 73 | " |
|  | " | " | 80 | " | " | " | 60 | " |
|  | " | " | 90 | " | " | " | 37 | " |

## TABLEAU VII (suite)

| | (1) | (2) M | (2) S | | L.S. | (3) | (4) | (5) |
|---|---|---|---|---|---|---|---|---|
| 4 | 20 | 50 | 50 | 5 | 4,64 | 30 | 44 | 4,60 |
|   | 30 | " | " | " | " | " | 58 | 3,10 |
|   | 40 | " | " | " | " | " | 63 | 2,33 |
|   | 50 | " | " | " | " | " | 80 | 1,87 |
|   | 85 | " | " | " | " | " | 70 | 1,11 |
| 5 | 60 | 50 | 50 | 5 | 4,64 | 2 | 38 | 1,56 |
|   | " | " | " | " | " | 12 | 78 | " |
|   | " | " | " | " | " | 30 | 80 | " |
|   | " | " | " | " | " | 105 | 81 | " |
|   | " | " | " | " | " | 180 | 80 | " |
|   | " | " | " | " | " | 285 | 79 | " |

\* MGLA = Matière Grasse laitière anhydre
\* L.S. = Limite de solubilité à température donnée

(1) en % par rapport à la MGLA
(2) Température en °C
    M = Mise en contact - S = Séparation
(3) Temps de mise en contact en minutes
(4) Rendement d'extraction

$$\text{en \% } \frac{\text{cholestérol final}}{\text{cholestérol initial}}$$

(5) Niveau de saturation

Commentaires des résultats

Dans l'essai 1, des concentrations en cyclodextrine de 1 à 7 % en poids par rapport au beurre concentré ont conduit à des rendements d'extraction compris entre 26 et 88 %. En augmentant le niveau de saturation, ou améliore les rendements d'extraction.

L'essai 2 fait apparaître que plus la température de mise en contact augmente et plus le niveau de saturation diminue, plus les rendements d'extraction correspondants diminuent.

L'essai 3 montre qu'il en va de même pour la température de séparation. Il apparait préférable de ne pas dépasser 60°C.

Il ressort des résultats de l'essai 4 qu'une quantité d'eau de 50 % permet d'atteindre un rendement d'extraction très satisfaisant de 80 %, supérieur à celui obtenu avec 100 % d'eau.

Les extractions réalisées avec des durées de mise en contact croissantes dans l'essai 5 montrent qu'à partir d'un temps de l'ordre de 12 minutes, on atteint pratiquement un plateau équivalent à un rendement d'environ 80 % d'extraction.

## EXEMPLE IX

Traitement d'un milieu gras à l'aide de cyclodextrine.

Une quantité de 50 kg d'huile de mais dont on a extrait au préalable les phospholipides (démucilagination) et qui présente un indice d'acide de 1,5 (exprimé en % d'acide oléique pour 100 g), est traitée à l'aide de 1,2 kg de $\beta$-cyclodextrine (commercialisée par la Société Demanderesse sous la marque KLEPTOSE) en vue d'extraire les acides gras libres et les composés de dégradation contenus dans cette huile.

La $\beta$-cyclodextrine, qui se présente sous forme de poudre est dispersée par agitation dans l'huile à traiter. On ajoute lentement 20 kg d'eau de façon à former par agitation et à température ambiante (20°C, L.S. = 1,48) une émulsion grossière. Le niveau de saturation est de 3,54.

L'ensemble est ensuite homogénéisé par agitation à 13500 tours/minute pendant 1 minute à l'aide d'un appareil de type UNIMIX. On obtient ainsi une émulsion fine de type huile dans eau, de texture semblable à une mayonnaise.

Cette émulsion est chauffée à 90°C avant d'être centrifugée à 6000 tours/minute pendant 5 minutes. Il se forme ainsi trois phases :
- une phase huileuse qui, après lavage à l'eau et séchage, présente un indice d'acide de 0,6,
- une phase aqueuse,
- un culot de centrifugation de couleur blanche.

## EXEMPLE X

Traitement d'un condensat de désodorisation à l'aide de cyclodextrine.

1000 g de condensat de désodorisation d'une huile de tournesol sont traités à l'aide de $\beta$-cyclodextrine (commercialisée sous la marque déposée KLEPTOSE par la Société Demanderesse) de manière à extraire les phytostérols qu'il contient. La composition de ce co-produit issu du raffinage d'une huile de tournesol est donnée dans le Tableau III ci-dessous.

On réalise sur ce condensat une double extraction en procédant comme suit :
- 160 g de $\beta$-cyclodextrine KLEPTOSE et 160 g d'eau à 20°C (L.S. = 1,48) sont ajoutés au condensat. Le niveau de saturation est de 53. Le tout est homogénéisé pendant 5 minutes avec un matériel de type ULTRATURAX de manière à obtenir une émulsion visqueuse et homogène. Celle-ci est ensuite diluée avec 3000 g d'eau avant d'être centrifugée à 3000 tours/minute et à température ambiante. On sépare ainsi un premier culot de centrifugation, une phase grasse et une phase aqueuse intermédiaire. Cette dernière est éliminée. Les deux autres phases sont conservées.
- 160 g de $\beta$-cyclodextrine KLEPTOSE et 160 g d'eau à 20°C sont ajoutés à la phase grasse surnageante obtenue comme décrit ci-dessus afin de réaliser une seconde extraction. On procède de manière identique afin d'obtenir un second culot de centrifugation et une phase grasse ayant subi une double extraction. Cette dernière est séchée en étuve à 40°C pendant 48 heures.

Sa composition et celle du condensat de départ sont données dans le tableau VIII ci-dessous.

22

TABLEAU VIII

|  | Composition du condensat de désodorisation utilisé (%) | Composition de la phase grasse surnageante (%) |
|---|---|---|
| <u>Mat. grasses totales</u> dont | 86,0 | 94,0 |
| - acides gras libres et triglycérides | 82,0 | 82,5 |
| - phytostérols ($\beta$ sitostérol + stigmastérol) | 13,4 | 12,8 |
| - tocophérols ($\alpha$ + $\beta$ ) | 4,6 | 4,7 |
| $\beta$-cyclodextrine | - |  |
| <u>Autres</u> (eau, glycérine, pigments) | 14,0 | 6,0 |

La $\beta$-cyclodextrine, par inclusion sélective, a permis une extraction des phytostérols. La phase grasse traitée s'est enrichie en tocophérols, en acides gras libres et en triglycérides.

**EXEMPLE XI**

<u>Obtention d'un isolat aromatique enrichi à l'aide de cyclodextrine.</u>

Une huile essentielle de menthe poivrée est traitée au moyen de $\beta$-cyclodextrine (commercialisée par la Société Demanderesse sous la marque KLEPTOSE) afin d'obtenir un isolat aromatique riche en menthol.

Pour cela, 110 g de $\beta$-cyclodextrine KLEPTOSE sont mélangés à 50 g d'eau distillée à température ambiante (L.S. = 1,48). Le niveau de saturation est de 103,5. On obtient ainsi une pâte blanche visqueuse à laquelle sont ajoutés lentement, sous agitation mécanique, 200 g d'huile essentielle.

L'ensemble est ensuite homogénéisé à 13500 tours/minute en utilisant un appareil de type UNIMIX. On obtient alors une pâte en suspension dans le milieu huileux.

Cette pâte est séparée de l'huile en excès par filtration sous vide, en utilisant un appareil de type Buchner. En final, on obtient une poudre aromatique blanche. Celle-ci contient sur sec 12,6 % d'isolat aromatique.

**Revendications**

1. Procédé d'extraction à l'aide de cyclodextrine de composés mineurs gras contenu dans une matière biologique dans lequel la cyclodextrine est mise en contact sous agitation et dans un milieu réactionnel comprenant de l'eau, avec la matière à traiter de façon à permettre la formation de complexes d'inclusion entre la cyclodextrine et les composés mineurs gras, ces complexes étant ensuite séparés de ladite matière, caractérisé en ce que la mise en contact dure 10 à 120 minutes et en ce que la température du milieu réactionnel et la quantité d'eau sont ajustées de façon à ce que la concentration en cyclodextrine dans le milieu réactionnel soit, dès cette mise en contact, supérieure à la limite de solubilité de la cyclodextrine à la température réactionnelle.

2. Procédé selon la revendication 1, caractérisé en ce que la concentration en cyclodextrine est supérieure ou égale à 1,67 fois, de préférence supérieure à 1,87 fois et plus préférentiellement encore supérieure à 2,0 fois la limite de solubilité de la cyclodextrine à la température réactionnelle.

3. Procédé selon la revendication 1 ou la revendication 2, caractérisé en ce que la concentration en cyclodextrine est inférieure à 3000 fois, de préférence inférieure à 1500 fois et plus préférentiellement encore inférieure à 750 fois la limite de solubilité de la cyclodextrine à la température réactionnelle.

4. Procédé selon l'une des revendications 1 à 3, caractérisé en ce que la quantité d'eau présente dans le milieu réactionnel est inférieure à 100 %, de préférence comprise entre 10 et 90 %, et plus préférentiellement entre 20 et 80 % en poids par rapport à la quantité de matière d'origine biologique à traiter exprimée en sec.

5. Procédé selon l'une quelconque des revendications 1 à 4, caractérisé en ce que la cyclodextrine est du type alpha, bêta ou gamma, de préférence bêta, substituée ou non.

EP 0 498 870 B1

6. Procédé selon l'une quelconque des revendications 1 à 5, caractérisé en ce que la quantité de cyclodextrine utilisée est comprise entre 0,5 et 15 %, de préférence entre 1 et 10 % et plus préférentiellement encore entre 3 et 8 % par rapport à la quantité de matière d'origine biologique à traiter exprimée en sec.

7. Procédé selon l'une quelconque des revendications 1 à 6, caractérisé en ce que la cyclodextrine pulvérulente séchée mise en oeuvre possède une teneur en eau inférieure ou égale à 11 % en poids, de préférence 7 % en poids et plus préférentiellement encore à 5 % en poids et ce qu'elle est éventuellement réhydratée jusqu'à une teneur en eau inférieure ou égale à 15 % en poids.

8. Procédé selon l'une quelconque des revendications 1 à 7, caractérisé en ce que la mise en contact cyclodextrine/matière à traiter s'effectue à une température choisie de telle sorte que les corps gras contenus dans ladite matière se trouvent à l'état figé, c'est-à-dire présentent un tas de corps gras solides ou cristallins supérieur ou égal à 5 % en poids.

9. Procédé selon la revendication 8, caractérisé en ce que la température est choisie de telle sorte que le taux de corps gras solides ou cristallins soit de préférence supérieur ou égal à 10 % et plus préférentiellement encore à 30 %.

10. Procédé selon l'une quelconque des revendications 8 ou 9, caractérisé en ce que la teneur en eau est comprise entre 20 et 60 % en poids par rapport à la matière à traiter exprimée en sec.

11. Procédé selon l'une quelconque des revendications 8 à 10, caractérisé en ce que le mélange matière à traiter/eau/cyclodextrine se présente sous une forme pâteuse que l'on soumet, pendant la durée de la mise en contact, à une opération de malaxage au cours de laquelle se forment des complexes cyclodextrine/composés mineurs gras.

12. Procédé selon l'une quelconque des revendications 8 à 11, caractérisé en ce que la séparation des complexes d'inclusion cyclodextrine/composés mineurs gras est réalisée en portant le mélange à une température choisie de telle sorte que les corps gras contenus dans la matière d'origine biologique à traiter se trouvent à l'état fondu, c'est-à-dire dans un état où le taux de corps gras solides ou cristallins est inférieur à 1 % en poids, ce grâce à quoi une phase grasse surnageante à teneur réduite en composés mineurs gras se sépare d'une phase mixte hydrolipidique contenant les complexes d'inclusion cyclodextrine/composés mineurs gras.

13. Procédé selon l'une quelconque des revendications 1 à 6, caractérisé en ce que la température est choisie de façon à ce que les corps gras contenus dans la matière d'origine biologique à traiter soient à l'état non figé et de préférence à l'état fondu, c'est-à-dire que le taux de corps gras solides ou cristallins est inférieur à 5 % et de préférence à 1 % en poids.

14. Procédé selon la revendication 13, caractérisé en ce que la teneur en eau est comprise entre 45 et 80 % en poids par rapport à la matière à traiter exprimée en sec.

15. Procédé selon l'une quelconque des revendications 1 à 14, caractérisé en ce que la température de séparation est inférieure ou égale à 60°C.

16. Procédé selon l'une quelconque des revendications 13 à 15, caractérisé en ce que la séparation des complexes d'inclusion formés consiste à effectuer une centrifugation ou une décantation du mélange obtenu après la mise en contact de manière à recueillir un culot contenant lesdits complexes, une phase intermédiaire aqueuse, et une phase surnageante lipidique à teneur réduite en composés mineurs gras.

17. Procédé selon l'une quelconque des revendications 1 à 16, caractérisé en ce que la matière d'origine biologique est une matière grasse animale ou une matière grasse végétale ou encore un mélange de matières grasses animales et de matières grasses végétales.

18. Procédé selon l'une quelconque des revendications 1 à 17, caractérisé en ce que les composés mineurs sont des stéroïdes, des alcools gras, des acides gras libres, des vitamines liposolubles, des

24

pigments, des hydrocarbures, des acides abiétiques et primariques ou des composés d'arômes.

**Claims**

1. Process for extracting minor fatty compounds which occur in a substance of biological origin, using cyclodextrin, in which the cyclodextrin is placed in contact, with stirring and in a reaction medium containing water, with the substance to be treated so as to allow the formation of inclusion complexes between the cyclodextrin and the minor fatty compounds, these complexes being subsequently separated from the said substance, characterised in that the placing in contact lasts from 10 to 120 minutes and in that, during the placing in contact, the temperature of the reaction medium and the amount of water are chosen such that the concentration of cyclodextrin in the reaction medium, from the moment of said placing in contact, is higher than the solubility limit of the cyclodextrin at the reaction temperature.

2. Process according to Claim 1, characterised in that the concentration of the cyclodextrin is greater than or equal to 1.67 times, preferably greater than 1.87 times and still more preferably greater than 2.0 times the solubility limit of the cyclodextrin at the reaction temperature.

3. Process according to Claim 1 or Claim 2, characterised in that the concentration of the cyclodextrin is less than 3000 times, preferably less than 1500 times and still more preferably less than 750 times the solubility limit of the cyclodextrin at the reaction temperature.

4. Process according to one of Claims 1 to 3, characterised in that the amount of water present in the reaction medium is lower than 100%, preferably between 10 and 90%, and still more preferably between 20 and 80%, by weight relative to the amount of substance of biological origin to be treated, expressed on a dry basis.

5. Process according to any one of Claims 1 to 4, characterised in that the cyclodextrin is of the alpha, beta or gamma type, preferably of the beta type, which is substituted or unsubstituted.

6. Process according to any one of Claims 1 to 5, characterised in that the amount of cyclodextrin used is between 0.5 and 15%, preferably between 1 and 10%, and still more preferably between 3 and 8% relative to the amount of substance of biological origin to be treated, expressed on a dry basis.

7. Process according to any one of Claims 1 to 6, characterised in that the dried pulverulent cyclodextrin used has a water content of less than or equal to 11% by weight, preferably less than or equal to 7% by weight and still more preferably less than or equal to 5% by weight and in that it is optionally rehydrated up to a water content of less than or equal to 15% by weight.

8. Process according to any one of Claims 1 to 7, characterised in that the placing in contact of cyclodextrin/substance to be treated is carried out at a temperature which is chosen such that the fatty substances present in the said substance are in a congealed state, that is to say have a level of solid or crystalline fatty substances greater than or equal to 5% by weight.

9. Process according to Claim 8, characterised in that the temperature is chosen such that the level of solid or crystalline fatty substances is preferably greater than or equal to 10%, and still more preferably greater than or equal to 30%.

10. Process according to any one of Claims 8 or 9, characterised in that the water content is between 20 and 60% by weight relative to the substance to be treated, expressed on a dry basis.

11. Process according to any one of Claims 8 to 10, characterised in that the substance to be treated/water/cyclodextrin mixture is provided in a paste form which is subjected, during the period of placing in contact, to a kneading operation during which cyclodextrin/minor fatty compound complexes are formed.

12. Process according to any one of claims 8 to 11, characterised in that the separation of the cyclodextrin/minor fatty compound inclusion complexes is carried out by heating the mixture to a

EP 0 498 870 B1

temperature which is chosen such that the fatty substances present in the substance of biological origin to be treated are in a molten state, that is to say in a state wherein the level of solid or crystalline fatty substances is less than 1% by weight, by virtue of which a supernatant fatty phase with a reduced content of minor fatty compound is separated from a mixed water-lipid phase containing the cyclodextrin/ minor fatty compound inclusion complexes.

13. Process according to any one of Claims 1 to 6, characterised in that the temperature is chosen so that the fatty substances present in the substance of biological origin to be treated are in a noncongealed state, and preferably in a molten state, that is to say that the level of solid or crystalline fatty substances is less than 5%, and preferably less than 1%, by weight.

14. Process according to Claim 13, characterised in that the water content is between 45 and 80% by weight relative to the substance to be treated expressed on a dry basis.

15. Process according to any one of Claims 1 to 14, characterised in that the separation temperature is less than or equal to 60°C.

16. Process according to any one of Claims 13 to 15, characterised in that the separation of the inclusion complexes formed consists in carrying out a centrifugation or a decantation of the mixture obtained after placing in contact, so as to recover a pellet containing the said complexes, an aqueous intermediate phase and a supernatant lipid phase with a reduced minor fatty compound content.

17. Process according to any one of Claims 1 to 16, characterised in that the substance of biological origin is an animal fat or a vegetable fat or a mixture of animal and vegetable fats.

18. Process according to any one of Claims 1 to 17, characterised in that the minor compounds are steroids, fatty alcohols, free fatty acids, fat soluble vitamins, pigments, hydrocarbons, abietic and primaric acids or aromatic compounds.

**Patentansprüche**

1. Verfahren zur Extraktion von Nebenfettverbindungen aus einer biologischen Substanz mit Hilfe von Cyclodextrin, wobei das Cyclodextrin unter Rühren und in einem Wasser umfassenden Reaktionsmedium mit der zu behandelnden Substanz in Kontakt gebracht wird, so daß die Bildung von Einschlußkomplexen zwischen Cyclodextrin und den Nebenfettverbindungen ermöglicht wird, und diese Komplexe anschließend von der genannten Substanz abgetrennt werden, dadurch gekennzeichnet, daß das In-Kontakt-Bringen 10 bis 120 Minuten lang dauert und daß die Temperatur des Reaktionsmediums und die Wassermenge in der Weise eingestellt werden, daß die Konzentration an Cyclodextrin in dem Reaktionsmedium von dem Zeitpunkt dieses In-Kontakt-Bringens an höher liegt als die Grenze der Löslichkeit von Cyclodextrin bei der Reaktionstemperatur.

2. Verfahren nach Anspruch 1, dadurch gekennzeichnet, daß die Konzentration an Cyclodextrin gleich oder höher als 1,67 mal, vorzugsweise höher als 1,87 mal und ganz besonders bevorzugt höher als 2 mal die Grenze der Löslichkeit von Cyclodextrin bei der Reaktionstemperatur beträgt.

3. Verfahren nach Anspruch 1 oder Anspruch 2, dadurch gekennzeichnet, daß die Konzentration an Cyclodextrin niedriger als 3000 mal, vorzugsweise niedriger als 1500 mal und ganz besonders bevorzugt niedriger als 750 mal die Grenze der Löslichkeit von Cyclodextrin bei der Reaktionstemperatur beträgt.

4. Verfahren nach irgendeinem der Ansprüche 1 bis 3, dadurch gekennzeichnet, daß die in dem Reaktionsmedium anwesende Wassermenge niedriger als 100 Gew.-%, vorzugsweise zwischen 10 und 90 Gew.-% und ganz besonders bevorzugt zwischen 20 und 80 Gew.-% liegt, bezogen auf die Menge an zu behandelnder Substanz biologischer Herkunft, ausgedrückt in Trockensubstanz.

5. Verfahren nach irgendeinem der Ansprüche 1 bis 4, dadurch gekennzeichnet, daß das Cyclodextrin vom Typ $\alpha$, $\beta$ oder $\gamma$, vorzugsweise vom Typ $\beta$, und substituiert oder unsubstituiert ist.

26

6. Verfahren nach irgendeinem der Ansprüche 1 bis 5, dadurch gekennzeichnet, daß die Menge an verwendetem Cyclodextrin zwischen 0,5 und 15 %, vorzugsweise zwischen 1 und 10 % und ganz besonders bevorzugt zwischen 3 und 8 % liegt, bezogen auf die Menge an zu behandelnder Substanz biologischer Herkunft, ausgedrückt in Trockensubstanz.

7. Verfahren nach irgendeinem der Ansprüche 1 bis 6, dadurch gekennzeichnet, daß das eingesetzte pulverförmige und getrocknete Cyclodextrin einen Wassergehalt von niedriger oder gleich 11 Gew.-%, vorzugsweise von 7 Gew.-% und ganz besonders bevorzugt von 5 Gew.-% besitzt, und daß es gegebenenfalls bis zu einem Wassergehalt von niedriger oder gleich 15 Gew.-% rehydratisiert ist.

8. Verfahren nach irgendeinem der Ansprüche 1 bis 7, dadurch gekennzeichnet, daß das In-Kontakt-Bringen zwischen Cyclodextrin und zu behandelnder Substanz bei einer Temperatur erfolgt, die in der Weise gewählt wird, daß sich die in der Substanz enthaltenen Fettkörper im erstarrten Zustand befinden, das heißt in einem Zustand, bei dem der Gehalt an festen oder kristallinen Fettkörpern höher oder gleich 5 Gew.-% beträgt.

9. Verfahren nach Anspruch 8, dadurch gekennzeichnet, daß die Temperatur in der Weise gewählt wird, daß der Gehalt an festen oder kristallinen Fettkörpern vorzugsweise höher oder gleich 10 %, und ganz besonders bevorzugt 30 % beträgt.

10. Verfahren nach irgendeinem der Ansprüche 8 oder 9, dadurch gekennzeichnet, daß der Wassergehalt zwischen 20 und 60 Gew.-% liegt, bezogen auf die zu behandelnde Substanz, ausgedrückt in Trockensubstanz.

11. Verfahren nach irgendeinem der Ansprüche 8 bis 10, dadurch gekennzeichnet, daß die Mischung zwischen zu behandelnder Substanz, Wasser und Cyclodextrin in einer pastösen Form vorliegt, die während der Dauer des In-Kontakt-Bringens einem Knetvorgang unterzogen wird, in dessen Verlauf sich Komplexe zwischen Cyclodextrin und den Nebenfettverbindungen bilden.

12. Verfahren nach irgendeinem der Ansprüche 8 bis 11, dadurch gekennzeichnet, daß die Abtrennung der Einschlußkomplexe zwischen Cyclodextrin und den Nebenfettverbindungen in der Weise realisiert wird, daß man die Mischung auf eine solche Temperatur bringt, bei der sich die in der zu behandelnden Substanz biologischer Herkunft enthaltenen Fettkörper im geschmolzenen Zustand befinden, das heißt in einem Zustand, wo der Gehalt an festen oder kristallinen Fettkörpern niedriger als 1 Gew.-% liegt, aufgrunddessen sich eine aufschwimmende fette Phase mit einem reduzierten Gehalt an Nebenfettverbindungen von einer gemischten hydrolipidischen Phase abscheidet, die die Einschlußkomplexe zwischen Cyclodextrin und den Nebenfettverbindungen enthält.

13. Verfahren nach irgendeinem der Ansprüche 1 bis 6, dadurch gekennzeichnet, daß die Temperatur in der Weise gewählt wird, daß die in der zu behandelnden Substanz biologischer Herkunft enthaltenen Fettkörper im nicht erstarrten und vorzugsweise im geschmolzenen Zustand vorliegen, das heißt, daß der Gehalt an festen oder kristallinen Fettkörpern niedriger als 5 Gew.-% und vorzugsweise 1 Gew.-% beträgt.

14. Verfahren nach Anspruch 13, dadurch gekennzeichnet, daß der Wassergehalt zwischen 45 und 80 Gew.-% liegt, bezogen auf die zu behandelnde Substanz, ausgedrückt in Trockensubstanz.

15. Verfahren nach irgendeinem der Ansprüche 1 bis 14, dadurch gekennzeichnet, daß die Temperatur bei der Abtrennung unterhalb von oder gleich 60 °C beträgt.

16. Verfahren nach irgendeinem der Ansprüche 13 bis 15, dadurch gekennzeichnet, daß die Abtrennung der gebildeten Einschlußkomplexe darin besteht, eine Zentrifugierung oder eine Dekantation der nach dem Kontakt erhaltenen Mischung in der Weise durchzuführen, daß man einen Rückstand, der die genannten Komplexe enthält, eine wäßrige Zwischenphase und eine aufschwimmende lipidische Phase mit reduziertem Gehalt an den Nebenfettverbindungen gewinnt.

17. Verfahren nach irgendeinem der Ansprüche 1 bis 16, dadurch gekennzeichnet, daß die Substanz biologischer Herkunft eine tierische Fettsubstanz oder eine pflanzliche Fettsubstanz ist, oder auch eine Mischung von tierischen und pflanzlichen Fettsubstanzen.

18. Verfahren nach irgendeinem der Ansprüche 1 bis 17, dadurch gekennzeichnet, daß die Nebenfettverbindungen Steroide, Fettalkohole, freie Fettsäuren, lipolösliche Vitamine, Pigmente, Kohlenwasserstoffe, Abietinsäure, Pimarinsäure oder Verbindungen von Aromen sind.